# DEMANDE DE BREVET EUROPEEN

(11) **EP 1 382 833 A1**
(43) Date de publication de la demande: **21.01.2004**
(21) Numéro de dépôt: 02011320.5
(22) Date de dépôt: 23.05.2002
(51) Int. Cl.: F02M 35/02, F01N 3/022, B01D 39/16

(54) **Canalisation de circulation de gaz**

(71) Demandeur: Mann + Hummel GmbH, 71638 Ludwigsburg (DE)
(72) Inventeur: Sarrazin, Jean-Michel, 44850 Le Cellier (FR)
(74) Mandataire: Voth, Gerhard, Dipl.-Ing.

(57) **Abrégé**

Canalisation de circulation de gaz, contenant un lit de particules solides fixé directement à l'intérieur de ladite canalisation pour la filtration du gaz.

## Description

La présente invention concerne une canalisation permettant de véhiculer et de filtrer un gaz, un procédé permettant de fabriquer une telle canalisation et une canalisation d'alimentation en air d'un moteur à combustion interne.

Il existe de nombreux procédés industriels dans lesquels un fluide gazeux ou liquide doit être véhiculé et filtré pour en enlever des impuretés. Des exemples de tels procédés sont le traitement des eaux, le conditionnement d'air, la ventilation de certains locaux (dans l'industrie de la peinture par exemple), l'alimentation en air des moteurs à combustion interne... La plupart des dispositifs de filtration utilisés à cet effet sont constitués d'un boîtier rempli d'un milieu filtrant constitué de fibres, d'un tissu ou d'un mat filtrant à base de métal, cellulose, matière plastique expansée...qui est monté sur la canalisation.

Ainsi, le brevet US 2,612,966 décrit un filtre à air obtenu en emprisonnant des particules en polyéthylène (PE) dans un boîtier constitué d'un cadre et de deux grilles ayant des ouvertures appropriées pour retenir les particules de PE mais laisser passer l'air à filtrer. Un tel dispositif filtrant présente l'avantage, par rapport à des solutions impliquant le recours à des tissus ou des mats filtrants, d'être particulièrement simple à réaliser, d'avoir un volume, une efficacité et des pertes de charges modulables, et de pouvoir utiliser (valoriser) des particules de polymère de forme quelconque. Toutefois, il présente l'inconvénient de constituer une pièce séparée, qu'il convient de monter dans le circuit véhiculant l'air, ce qui augmente les risques de fuites et les frais de main d'oeuvre liés au montage.

La présente invention a dès lors pour objet une canalisation qui permet à la fois de véhiculer et de filtrer un gaz, qui ne présente pas de risques de fuites et ne nécessite pas le montage de pièces sur ou dans la canalisation, qui est encore plus facile à réaliser que la solution décrite ci-dessus, et qui permet en outre d'avoir une forme modulable.

La présente invention concerne dès lors une canalisation de circulation de gaz contenant un lit de particules solides fixé directement à l'intérieur de ladite canalisation pour la filtration du gaz.

La canalisation selon la présente invention présente une section quelconque mais de préférence dépourvue d'angles vifs, par exemple circulaire ou ovale. Cette canalisation peut être substantiellement rectiligne, mais également comporter des segments de forme quelconque, par exemple en forme de coudes ou incurvés.

La canalisation selon la présente invention est généralement à base de métal ou d'une matière plastique, de préférence thermoplastique. On peut citer à titre de matière thermoplastique, le chlorure de polyvinyle (PVC), les polyoléfines (PE et polypropylène (PP)), les polyamides (PA, et le PA 6,6 plus particulièrement)... Les polyoléfines et en particulier le PP, conviennent bien. Ces matières plastiques peuvent comprendre une charge et/ou un renfort, par exemple des billes de verre, des fibres (et en particulier, de fibres de verre ou de carbone) ou des particules telles que du talc, de la barytine, du carbonate de calcium... L'avantage des matières plastique réside notamment dans leur légèreté, leur ouvrabilité et leur résistance à la corrosion améliorée par rapport au métal.

Les particules solides de la canalisation selon la présente invention sont de forme quelconque, avantageusement allongée. Il s'agit de préférence de filaments, c.à.d. de joncs de longueur substantiellement supérieure à leur diamètre (par exemple au moins 5 fois supérieure, de préférence 20 fois, voire 100 fois). En effet, les filaments ont tendance à s'enchevêtrer et ce faisant, à créer un réseau qui augmente l'efficacité de la filtration. En outre, des filaments de matière sont générés lors de nombreux procédés industriels tels que le broyage et l'usinage de certains matériaux et même le transport pneumatique de particules initialement plus massives. Ces filaments sont généralement considérés comme des déchets et il est dès lors intéressant de pouvoir les valoriser. Avantageusement, les particules solides de la canalisation selon la présente invention sont des déchets de fabrication.

Les dimensions de ces particules sont avantageusement plus grandes que celles des impuretés à filtrer. Elles sont avantageusement de l'ordre du mm, voire du cm.

Les particules solides selon la présente invention peuvent être à base de cellulose, de laine, de verre, de métal, ou de une ou plusieurs matières plastiques. A noter que plusieurs de ces matériaux peuvent être combinés entre eux. Ces particules sont toutefois généralement en métal ou à base de matière plastique. Il s'agit avantageusement de particules de matière plastique et de préférence, thermoplastique. En effet, les matières plastiques présentent l'avantage de se charger en surface, par frottement, lors du passage du gaz et ce faisant, elles créent un champ électrostatique qui attire et retient les particules étrangères présentes dans le gaz. Les polyoléfines, et en particulier, le polypropylène, conviennent particulièrement bien de ce point de vue.

Ces particules sont directement fixées à l'intérieur de la canalisation selon l'invention. On entend par là qu'elles ne font pas partie d'une pièce séparée, qu'il faut monter dans ou sur la canalisation, mais qu'elles sont directement fixées sur la paroi de la canalisation, en étant de préférence agglomérées entre elles, éventuellement au moyen d'un liant. Ce liant peut être une colle, une matière solide dispersée dans un solvant, une matière à bas point de fusion (par rapport à celui de la matière constitutive des particules solides et de la canalisation).

Le gaz qui peut être véhiculé et filtré par la canalisation selon la présente invention est un gaz quelconque, mais de préférence de l'air. La canalisation selon la présente invention convient particulièrement bien pour véhiculer et filtrer de l'air d'alimentation aux moteurs à combustion interne.

La présente invention concerne également un procédé permettant de fabriquer une canalisation telle que décrite ci-avant, et qui consiste à introduire des particules solides dans une canalisation servant à véhiculer un gaz, et à les y fixer par agglomération. Cette agglomération peut être un simple accrochage mécanique mais de préférence, elle se fait au moyen d'un liant et/ou par soudage, par exemple en faisant passer un courant d'air chaud à travers la canalisation remplie de particules. Cette dernière alternative est préférée pour des raisons pratiques. Des filaments en PP conviennent particulièrement pour la réalisation de ce procédé étant donné que d'une part, ils ont tendance à friser (c.à.d. à se recroqueviller sur eux-mêmes), ce qui favorise l'accrochage mécanique entre eux et que d'autre part, ils sont faciles à souder par passage d'un courant d'air chaud à travers eux.

L'homme du métier adaptera aisément le choix des matériaux et les dimensions du système, ainsi que la densité de remplissage des particules solides à l'application industrielle visée et notamment, à la capacité, à l'efficacité filtrante, aux débits et pertes de charges souhaités, ainsi qu'aux conditions de pression, température...

Une application pour laquelle la présente invention convient particulièrement bien est l'alimentation en air des moteurs à combustion interne, tels que ceux des véhicules et en particulier, des véhicules automobiles.

Par conséquent, la présente invention concerne également canalisation d'alimentation en air d'un moteur à combustion interne tel que décrit ci-avant. Cette canalisation fait partie d'un système d'alimentation qui comprend généralement une tubulure d'alimentation en air, un filtre à air, un boîtier papillon (pour réguler le débit d'air) et un collecteur d'admission (comportant un plenum et un répartiteur pour alimenter l'air vers les cylindres du moteur). Selon cette variante de la présente invention, la tubulure d'admission est une canalisation telle que décrite ci-avant, ce qui permet de ne pas devoir prévoir de filtre à air séparé dans le système. En outre, en adaptant le volume et la densité de remplissage en particules solides, on peut obtenir un filtre efficace durant toute la durée de vie du moteur et qui optimise les pertes de charges de l'ensemble de la fonction d'admission d'air. Enfin, un tel filtre résiste particulièrement bien à l'humidité.

La canalisation selon cette variante de la présente invention et les particules solides qu'elle comporte sont avantageusement à base de matière plastique, et de préférence, à base de PP. Les particules sont généralement à base de PP vierge, et constituent avantageusement des déchets de fabrication, par exemple de polymérisation ou de mise en oeuvre des matières plastiques. La canalisation quant à elle peut contenir un renfort tel que de la barytine, du talc, des fibres de verre ou de carbone. Avantageusement, elle est en un matériau adapté à la température du gaz à filtrer. Si celui-ci est à relativement basse température (par exemple, de l'ambiante à 100°C), la canalisation est avantageusement en polypropylène, chargé ou non. Si celui-ci est à plus haute température (typiquement, au delà de 100°C), elle sera à base de polyamide (PA), de préférence chargé, par exemple avec des billes ou des fibres de verre , des fibres de carbone, des charges minérales telles que le talc ou la barytine.

Le diamètre de la canalisation selon cette variante de la présente invention est généralement supérieur ou égal à 10 mm, de préférence à 15 mm, voire à 20 mm. Il est généralement inférieur ou égal à 150 mm, de préférence à 125 mm, voire à 100 mm. La longueur de cette canalisation est généralement supérieure ou égale à 80 mm, et de préférence à 100 mm, voire à 150 mm. Elle est généralement inférieure ou égale à 600 mm, de préférence à 550 mm, voire à 500 mm. Avantageusement, au moins 30% de cette longueur est remplie de particules solides formant le lit selon la présente invention, de préférence au moins 40% sont remplis, voire au moins 50%. En général, la canalisation ne comporte pas plus de 90% de remplissage, de préférence 80%, voire 70%. La densité du remplissage selon cette variante de l'invention est généralement supérieure ou égale à 0.3, de préférence à 0.5, voire à 0.6. Elle est généralement inférieure ou égale à 1.2, de préférence à 1.0, voire à 0.9.

Les particules solides sont avantageusement des filaments dont les dimensions sont de préférence les suivantes: longueur supérieure ou égale à 2 mm, de préférence 2.5 mm, voire 5 mm, et inférieure ou égale à 20 mm, de préférence 10 mm, voire 8 mm ; diamètre supérieur ou égal à 0.2 mm, de préférence 0.5 mm, voire 1 mm, et inférieur ou égal à 5 mm, de préférence 2.5 mm, voire 2 mm.

Elles ont avantageusement fixées dans la canalisation par passage d'un courant d'air chaud à une température supérieure ou égale à 50°C, de préférence 60°C, voire 80°C, et inférieure ou égale à 400, de préférence 350, voire 320°C. Le débit de ce courant d'air chaud est de préférence supérieur ou égal à 40 kg/h, de préférence 50 kg/h, voire 60 kg/h, et inférieur ou égal à 8000 kg/h, de préférence 5000 kg/h, voire 2000 kg/h.

Cette canalisation peut être fixée dans le système d'admission d'air par toute méthode connue, par exemple par soudure. Cette canalisation peut également être réalisée d'une seule pièce avec une autre pièce du système d'admission d'air, par exemple avec le collecteur d'admission.

## Revendications

1. Canalisation de circulation de gaz, **caractérisée en ce qu'**elle contient un lit de particules solides fixé directement à l'intérieur de ladite canalisation pour la filtration du gaz.

2. Canalisation selon la revendication 1, **caractérisée en ce qu'**elle est à base de matière thermoplastique.

3. Canalisation selon l'une quelconque des revendications précédentes, **caractérisée en ce que** les particules solides sont des filaments.

4. Canalisation selon l'une quelconque des revendications précédentes, **caractérisée en ce que** les particules solides sont des déchets de fabrication.

5. Canalisation selon l'une quelconque des revendications précédentes, **caractérisée en ce que** les particules solides sont à base de matière thermoplastique.

6. Canalisation selon la revendication précédente, dans laquelle la matière thermoplastique est du polypropylène.

7. Utilisation d'une canalisation selon l'une quelconque des revendications précédentes, pour véhiculer et filtrer de l'air.

8. Utilisation d'une canalisation selon l'une quelconque des revendications 1 à 6 pour l'alimentation en air d'un moteur à combustion interne.

9. Procédé permettant de fabriquer une canalisation selon l'une quelconque des revendications 1 à 6 et 8, selon lequel on introduit des particules solides dans une canalisation servant à véhiculer un gaz, et on les y fixe par agglomération.

10. Procédé selon la revendication 9, **caractérisé en ce que** l'agglomération se fait au moyen d'un liant et/ou par soudage, en faisant passer un courant d'air chaud à travers la canalisation remplie des particules.
